# DEMANDE DE BREVET EUROPEEN

(11) **EP 3 301 693 A1**
(43) Date de publication de la demande: **04.04.2018**
(21) Numéro de dépôt: 17189546.9
(22) Date de dépôt: 06.09.2017
(51) Int. Cl.: H01F 7/16

(54) **VANNE A ACTIONNEUR ELECTROMAGNÉTIQUE PROPORTIONNEL**

(30) Priorité: 30.09.2016 BE 572716
(71) Demandeur: Safran Aero Boosters SA, 4041 Herstal (BE)
(72) Inventeur: PAULUS, Nicolas, 4261 Latinne (BE)
(74) Mandataire: Lecomte & Partners

(57) **Abrégé**

L'invention a pour objet un actionneur électromagnétique (4) proportionnel comprenant : une carcasse magnétique (20) ; un plongeur électromagnétique (22) mobile par rapport à la carcasse (20) et présentant une première moitié axiale ; un premier entrefer radial (26) ainsi qu'un deuxième entrefer radial (28) qui sont chacun formés radialement entre le plongeur (22) et la carcasse (20), et qui sont disposés axialement au niveau de la première moitié axiale du plongeur (22). Ces entrefers (26 ; 28) sont formés par des biseaux annulaires (32 ; 34) concentriques. L'invention a également pour objet une vanne trois voies pour huile de turboréacteur, qui est actionnée par un actionneur électromagnétique à double entrefers biseautés.

## Description

### Domaine technique

L'invention se rapporte au domaine des actionneurs électromagnétiques. Plus précisément, l'invention concerne un actionneur électromagnétique proportionnel dont le circuit magnétique est biseauté. L'invention traite également d'une vanne munie d'un actionneur électromagnétique.

### Technique antérieure

Un actionneur électromagnétique proportionnel permet de piloter précisément la position du plongeur, en plus d'autoriser une cinématique progressive. A cet effet, un tel actionneur montre un circuit magnétique avec un biseau formé sur le plongeur. La pointe circulaire de ce biseau ferme le circuit magnétique autour du noyau du circuit magnétique, et exploite les phénomènes de saturation magnétique de manière à moduler la force générée par le plongeur en fonction de l'alimentation électrique de la bobine électromagnétique. Grâce à l'emploi d'un ressort proportionnel, l'effort proportionnel du plongeur est converti en un déplacement proportionnel en fonction du courant d'alimentation.

Le document US2002000530 A1 divulgue une vanne électromagnétique pour une régulation hydraulique. La vanne comprend un noyau cylindrique et un plongeur définissant un entrefer annulaire à l'intérieur de la bobine. Le plongeur présente une poche entourée par une extrémité tubulaire biseautée au niveau de l'entrefer, la poche étant apte à recevoir une portion du noyau. Cependant, la course de cette vanne est limitée. Par ailleurs, l'effort produit par l'actionneur reste faible.

Le document JP2006097727 A divulgue une électrovanne proportionnelle avec un plongeur coulissant dans une carcasse à l'intérieur de la bobine. La carcasse et le plongeur définissent entre eux un entrefer radial. A cet effet, la carcasse montre une portion annulaire biseauté le long de l'entrefer dans l'optique de permettre un pilotage proportionnel du plongeur. Toutefois, la taille de la bobine est importante par rapport à celle du plongeur, ce qui augmente la masse de l'électrovanne. En outre, les lignes de champs suivent plusieurs changements de directions dans le plongeur, ce qui impose de l'épaissir et finalement d'alourdir l'électrovanne.

Le document DE 28 14 562 A1 divulgue une vanne électromagnétique. La vanne comporte une carcasse, un plongeur, et deux entrefers radiaux entre le plongeur et la carcasse.

### Résumé de l'invention

### Problème technique

L'invention a pour objectif de résoudre au moins un des problèmes posés par l'art antérieur. Plus précisément, l'invention a pour objectif d'augmenter l'effort produit par une vanne électromagnétique. L'invention a également pour objectif de proposer une solution simple, résistante, légère, économique, fiable, facile à produire, commode d'entretien, d'inspection aisée, et améliorant l'étanchéité.

### Solution technique

L'invention a pour objet un actionneur électromagnétique, notamment un actionneur électromagnétique proportionnel, l'actionneur comprenant : une carcasse magnétique ; un plongeur électromagnétique mobile selon une direction axiale par rapport à la carcasse, le plongeur comprenant une première moitié axiale ; et un premier entrefer radial qui est formé radialement entre le plongeur et la carcasse magnétique, et qui est disposé axialement au niveau de la première moitié axiale du plongeur ; remarquable en ce qu'il comprend en outre un deuxième entrefer radial qui est formé radialement entre le plongeur et la carcasse magnétique, et qui est disposé axialement au niveau de la première moitié axiale du plongeur, éventuellement le premier et/ou le deuxième entrefer circulaire comprend/comprennent une épaisseur radiale constante le long du plongeur électromagnétique.

L'épaisseur radiale constante d'au moins un ou de chaque entrefer peut être mesuré dans au moins une position du plongeur, par exemple dans sa première et/ou dans sa deuxième position.

Selon des modes particuliers de réalisation, l'actionneur peut comprendre une ou plusieurs des caractéristiques suivantes, prises isolément ou selon toutes les combinaisons techniques possibles :
- Le premier entrefer et le deuxième entrefer sont formés depuis la même extrémité axiale du plongeur, et/ou depuis la même extrémité axiale de la carcasse.
- Le premier entrefer et le deuxième entrefer sont disposés au même niveau axialement ou sont décalés axialement.
- Le plongeur est au moins mobile entre une première position et une deuxième position dans lesquelles l'épaisseur radiale d'au moins un ou de chaque entrefer reste égale.
- La carcasse comprend une portion venue de matière délimitant radialement le premier entrefer et le deuxième entrefer.
- L'actionneur comprend une source magnétique apte à produire un champ électromagnétique dans la carcasse et le plongeur, au moins un ou chaque entrefer étant disposé en dehors de ladite source magnétique, le plongeur étant éventuellement disposé en dehors de ladite source magnétique.
- La carcasse et le plongeur renferment entre eux une enceinte annulaire, éventuellement munie d'un évent traversant la carcasse.
- Le plongeur comprend une portion tubulaire disposée radialement entre le premier entrefer et le deuxième entrefer, éventuellement depuis la première position à la deuxième position.
- La portion tubulaire du plongeur présente une épaisseur radiale constante axialement.
- La carcasse comprend un premier biseau annulaire délimitant radialement le premier entrefer, et/ou un deuxième biseau annulaire délimitant radialement le deuxième entrefer.
- Le deuxième biseau est disposé radialement dans le plongeur et/ou dans le premier biseau.
- Au moins un ou chaque biseau annulaire comprend un profil annulaire incurvé ou sensiblement droit.
- Au moins un ou chaque biseau annulaire comprend un profil annulaire qui est généralement incliné par rapport à l'axe de déplacement du plongeur d' un angle β, ledit angle β étant inférieur ou égal à 45° ou à 30° ou à 20°.
- La carcasse comprend une cloison annulaire reliant radialement le premier entrefer au deuxième entrefer.
- L'épaisseur axiale de la cloison est inférieure à sa hauteur radiale, et/ou inférieure à l'épaisseur des biseaux annulaires.
- La carcasse comprend un noyau et un couvercle renfermant entre eux une chambre annulaire, notamment pour la source de champ magnétique.
- Le couvercle et/ou le noyau sont chacun venu de matière.
- Le noyau comprend une couronne externe et un barreau interne séparé de la couronne externe, la cloison annulaire étant éventuellement formée par un support de bobine.
- Le premier entrefer et le deuxième entrefer : se chevauchent axialement, éventuellement sur toute leur longueur ; et/ou sont de même longueur axialement, et/ou sont emmanchés.
- Le premier entrefer et/ou le deuxième entrefer présentent chacun une forme circulaire et/ou une forme de tube.
- Chaque diamètre d'entrefer est fixe, notamment sur toute la longueur axiale d'au moins un ou de chaque entrefer.
- L'épaisseur axiale de la cloison est inférieure à l'écart radial entre le premier entrefer et le deuxième entrefer.
- La chambre annulaire est fermée par le noyau et par le couvercle.
- La couronne externe et le barreau interne sont reliés via le couvercle et/ou via le support de bobine.
- La couronne externe et le barreau interne délimitent chacun l'un des entrefers.
- La carcasse et le plongeur forment entre eux un circuit magnétique fermé.
- Au niveau d'au moins un ou de chaque entrefer, le plongeur glisse contre ou effleure la carcasse.
- La course du plongeur est perpendiculaire à chaque entrefer.
- Chaque entrefer est en dehors de la bobine, le plongeur est notamment en dehors de la bobine.
- L'actionneur comprend un ressort proportionnel.

La présence du deuxième entrefer n'est pas un aspect indispensable de l'invention. L'invention a également pour objet un actionneur électromagnétique comprenant un circuit magnétique avec : une carcasse magnétique ; un plongeur électromagnétique mobile axialement par rapport à la carcasse ; et une portion biseautée circulairement qui forme un entrefer radial entre le plongeur et la carcasse magnétique, la portion biseautée comprenant un profil de révolution courbe et/ou concave.

L'invention a également pour objet un actionneur électromagnétique, notamment pour vanne, l'actionneur comprenant un circuit magnétique avec : une carcasse magnétique ; un plongeur électromagnétique mobile axialement par rapport à la carcasse ; une source de champ magnétique, notamment une bobine électromagnétique, apte à générer un champ magnétique ; une portion biseautée délimitant un entrefer radial entre le plongeur et la carcasse, ladite portion biseautée étant en dehors de la source de champ magnétique, éventuellement à distance axialement de la source de champ magnétique.

L'invention a également pour objet une vanne électromagnétique pour fluide, notamment une vanne pour véhicule spatial ou pour turboréacteur, comprenant un actionneur, remarquable en ce que l'actionneur électromagnétique est conforme à l'invention, préférentiellement la vanne est une vanne à trois voies.

Selon un mode avantageux de l'invention, la vanne comprend un passage pour le fluide, un logement dans lequel le plongeur est disposé, et une traversée pour le fluide entre le logement et le passage.

De manière générale, les modes avantageux de chaque objet de l'invention sont également applicables aux autres objets de l'invention. Dans la mesure du possible, chaque objet de l'invention est combinable aux autres objets. Les objets de l'invention sont également combinables aux modes de réalisation de la description, qui en plus sont combinables entre eux.

### Avantages apportés

L'invention permet de réduire le chemin parcouru axialement par les lignes de flux dans le plongeur. Ainsi, ces lignes de flux y suivent un chemin plus court, c'est-à-dire plus droit radialement au travers du plongeur. Grâce à cette particularité qu'offre l'invention, le plongeur peut être aminci et donc allégé. Son inertie diminuant, son temps de réponse s'améliore.

La configuration à deux entrefers superposés améliore significativement l'effort que peut fournir le plongeur tout en conservant son caractère proportionnel, et ce sur l'ensemble de sa course qui peut d'ailleurs s'allonger. En conséquence de quoi la bobine peut devenir plus petite, ce qui est cohérent avec une configuration du plongeur en dehors de la bobine. En outre, la longueur de la bobine diminue. Sa conception devient indépendante du dimensionnement du plongeur ; et inversement. Par ailleurs, les diamètres des entrefers deviennent indépendants de celui à l'intérieur de la bobine.

Placer les entrefers d'un même côté du plongeur et de la carcasse améliore l'étanchéité, et simplifie les mesures nécessaires pour la préserver. La carcasse forme alors un rempart étanche qui délimite les entrefers coaxiaux. Il devient plus aisé de former une séparation contre les fuites entre la partie fluide et la partie électrique. Selon certaines configurations, le fluide ne pénètre plus à l'intérieur de la bobine, ce qui permet de contourner les contraintes propres aux fluides corrosifs. Aussi, l'utilisation de pièces venues de matière esquive les défauts des soudures, ou l'intégration de joints rapportés. Le coût d'assemblage peut alors diminuer.

### Brève description des dessins

La figure 1 représente une vanne électromagnétique dans une configuration fermée l'invention.
La figure 2 représente une vanne électromagnétique dans une configuration ouverte l'invention.
La figure 3 illustre un actionneur électromagnétique selon un premier mode de réalisation de l'invention.
La figure 4 illustre un actionneur électromagnétique selon un deuxième mode de réalisation de l'invention.
La figure 5 illustre un actionneur électromagnétique selon un troisième mode de réalisation de l'invention.
La figure 6 illustre un actionneur électromagnétique selon un quatrième mode de réalisation de l'invention.

### Description des modes de réalisation

Dans la description qui va suivre, la direction axiale renvoie à la direction de translation du plongeur. La direction transversale et la direction radiale sont perpendiculaires à la direction axiale. Par entrefer radial on entend un entrefer qui est traversé essentiellement radialement par les lignes de flux de champ magnétique.

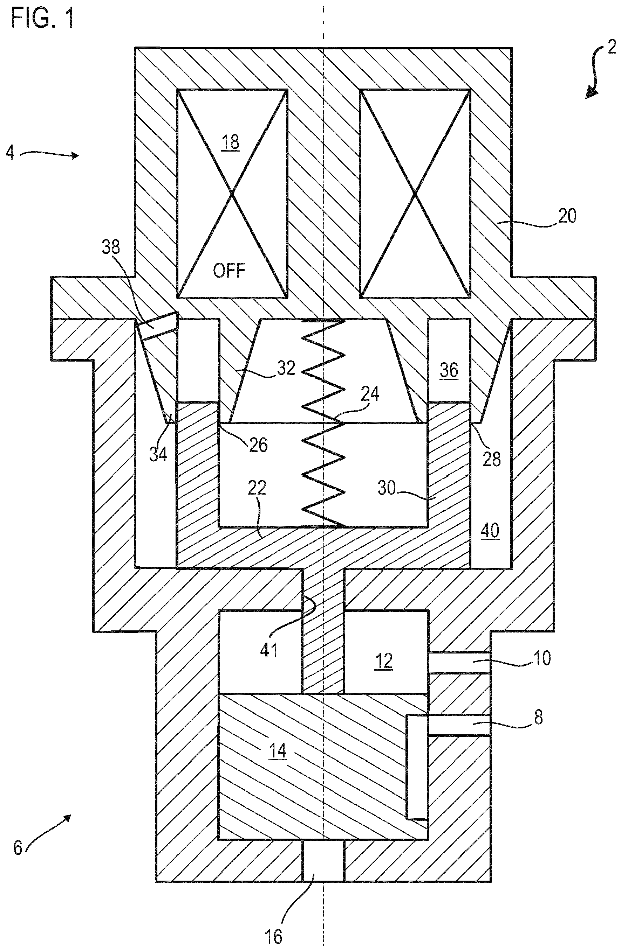

La figure 1 représente de manière simplifiée une vanne électromagnétique 2, ladite vanne étant représentée en coupe. La vanne électromagnétique 2 peut être une vanne de turboréacteur ou d'engin spatial, c'est-à-dire qu'elle est conçue de sorte à résister à des vibrations générant des accélérations d'au moins 10g ou 20g ou 60g. Dans le cas du turboréacteur, la vanne peut distribuer de l'huile moteur corrosive dont la température peut dépasser les 200°C.

La vanne électromagnétique 2 comprend un actionneur électromagnétique 4 et une portion de commande 6 qui régule l'écoulement du fluide. Le fluide peut être de l'huile, ou du gaz liquéfié. Le gaz peut être un gaz cryogénique. La portion de commande 6 comporte un corps avec une entrée 8, une sortie 10 et un passage 12 reliant l'entrée 8 à la sortie 10. En outre, la vanne électromagnétique 2 présente un obturateur 14, éventuellement de type tiroir, apte à ouvrir et à fermer la circulation de fluide entre l'entrée 8 à la sortie 10.

Optionnellement, la portion de commande peut présenter un échappement 16, par exemple en communication avec l'obturateur 14. La vanne électromagnétique 2 peut être de type à trois voies.

D'autres configurations de portion de commande peuvent être envisagées. Par exemple, l'entrée et la sortie peuvent être disposées sur des côtés transversalement opposés de l'obturateur. Une lumière peut traverser l'obturateur. L'entrée et la sortie peuvent être disposées sur deux faces axialement opposées.

L'actionneur électromagnétique 4 comprend un circuit magnétique avec une source de champ magnétique 18, telle une bobine électromagnétique ou encore un solénoïde proportionnel, une carcasse 20, et un plongeur 22 qui entraine en translation l'obturateur 14. Un ressort proportionnel 24 permet de maintenir le plongeur 22 dans une première position correspondant à la position fermée de l'obturateur 14 et donc de la vanne électromagnétique 2.

Lorsque la source 18 est alimentée électriquement, elle produit un champ magnétique se propageant dans la carcasse 20 et dans le plongeur 22. Ce champ magnétique traverse le premier entrefer 26, éventuellement interne, et le deuxième entrefer 28, éventuellement externe. Ces entrefers (26 ; 28) sont des entrefers radiaux. Ils sont présents sur une même extrémité axiale du plongeur 22, et sont contenus dans une même moitié ou un même tiers ou un même quart axial du plongeur 22. Ils présentent des formes circulaires, notamment tubulaires. Le plongeur 22 peut comprendre une portion tubulaire 30 engagée entre les entrefers (26 ; 28) qui sont également délimités par des biseaux annulaires (32 ; 34) formés sur la carcasse 20.

Les biseaux annulaires (32 ; 34) sont formés par des blocs circulaires de la carcasse 20. Le biseau intérieur 34 est entouré par le plongeur 22 ; notamment par sa portion tubulaire 30 qui est elle-même ceinturée par le biseau extérieur 34. Chacun de ces biseaux annulaires (32 ; 34) montre un amincissement, notamment circulaire, en direction axialement du plongeur 22, et ou vers la position fermée du plongeur 20. Ainsi, chaque extrémité axiale de biseaux annulaires (32 ; 34) limite le flux annulaire qui la traverse grâce au phénomène d'induction à saturation.

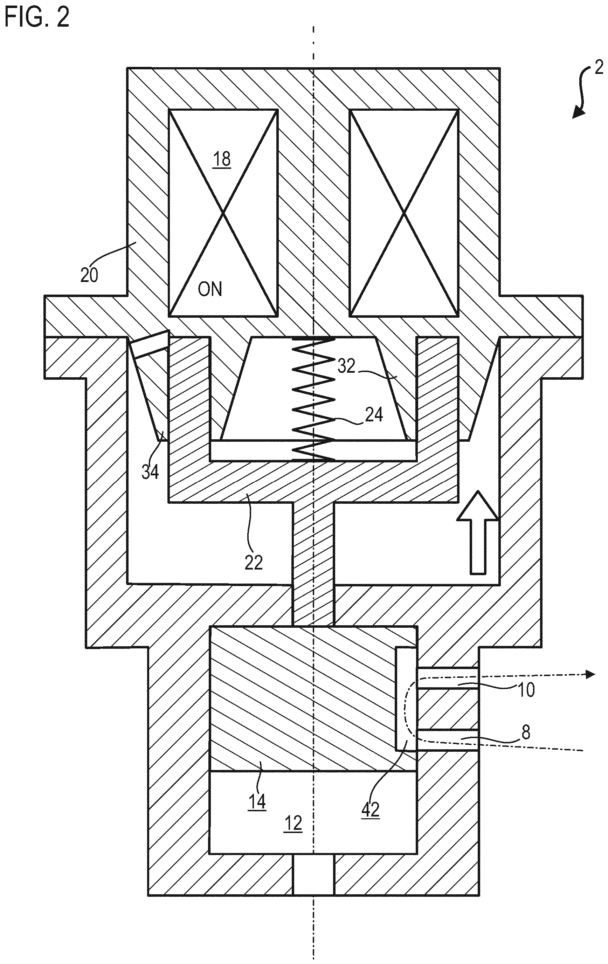

En coulissant, le plongeur 22 s'engage dans la carcasse 20. Ces derniers renferment entre eux une enceinte annulaire 36 dont les parois annulaires peuvent correspondre aux entrefers (26 ; 28). Afin de simplifier l'évacuation du fluide depuis l'enceinte 36, la carcasse est localement traversée par un évent 38. Cet évent 38 peut traverser un des biseaux annulaires (32 ; 34), par exemple celui à l'extérieur. Cet évent 38 devient utile puisque le fluide de la vanne électromagnétique 2 peut atteindre le logement 40 recevant le plongeur 22, et donc l'enceinte annulaire 36 après avoir franchi une traversée 41. La traversée 41 peut être un cheminement de fuite du passage 12 au logement 40. La figure 2 représente la vanne électromagnétique 2 de la figure 1 dans une configuration ouverte.

La source magnétique 18 est alimentée si bien que le champ magnétique qu'elle produit génère une force déplaçant le plongeur 22 en venant à bout de l'effort de maintien du ressort 24 qui se comprime. Le plongeur 22 s'enfonce dans la carcasse 20 et se loge entre les biseaux annulaires (32 ; 34). La réluctance du circuit magnétique évolue.

En réponse à l'alimentation électrique de la source 18, le plongeur 22 se déplace dans une deuxième position tout en étant suivi par l'obturateur 14 qui atteint une position ouverte. L'entrée 8 est en communication de la sortie 10 via le passage 12, et éventuellement via une gorge latérale 42 ménagée dans l'obturateur 14.

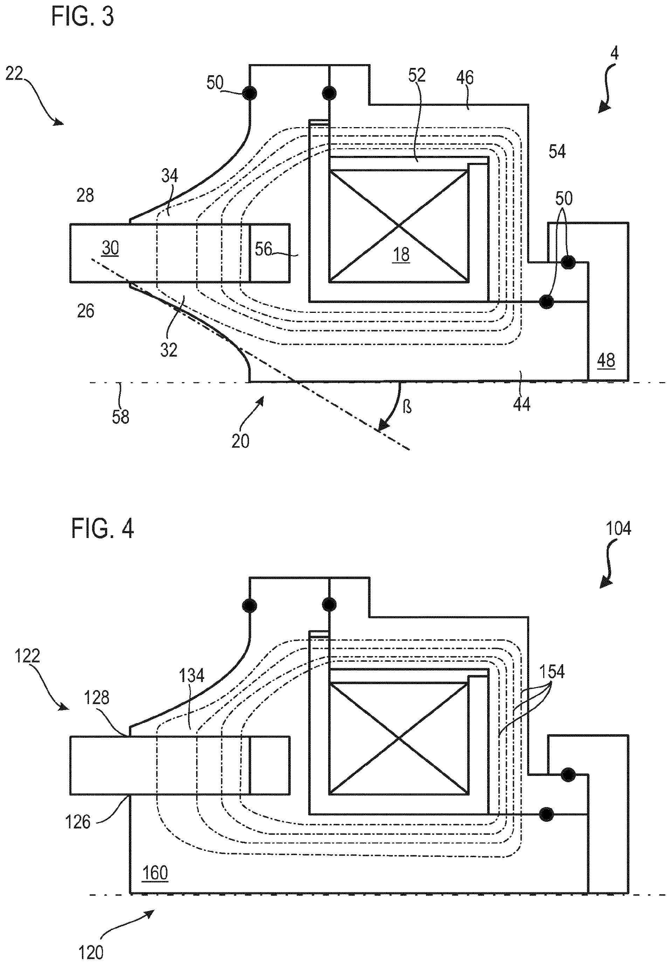

La figure 3 esquisse un agrandissement d'un actionneur électromagnétique 4 tel que celui présenté en relation avec les figures 1 et 2. Il est représenté via une moitié, la partie tubulaire 30 du plongeur 22 occupant une position intermédiaire.

La carcasse 20 comprend un noyau 44, un couvercle 46, et optionnellement un bouchon 48 améliorant l'étanchéité en étant chaussée autour du noyau 44 et du couvercle 46. Des joints circulaires 50 peuvent encore améliorer l'étanchéité, dont celle avec le corps de la vanne. Le noyau 44, le couvercle 46, et le plongeur 22 peuvent être réalisés en matériaux ferromagnétiques. Au moins un ou chacun d'eux est monobloc, et éventuellement venu de matière.

Le noyau 44 et le couvercle 46 délimitent une chambre annulaire 52 recevant la source magnétique 18. Ils forment une boucle fermée dans le circuit magnétique, et guident des lignes de flux magnétique 54. Ces lignes 54 empruntent les biseaux annulaires (32 ; 34) ainsi que les entrefers radiaux (26 ; 28), et traversent radialement le plongeur 22, et en particulier sa portion tubulaire 30.

Le noyau 44 présente une cloison annulaire 56 formant une liaison mécanique entre les biseaux annulaires (32 ; 34), et éventuellement une jonction magnétique dans le circuit. Cette cloison 56 peut être plus mince que haute radialement. Elle peut être amincie afin d'y favoriser l'induction à saturation si bien que les lignes de flux 54 empruntent essentiellement les biseaux annulaires (32 ; 34) ; ce qui améliore l'effort que peut produire l'actionneur électromagnétique 4. L'épaisseur axiale de cette cloison 56 peut être inférieure ou au moins deux fois inférieure à l'épaisseur radiale moyenne d'au moins un ou de chaque biseau annulaire (32 ; 34).

Les biseaux annulaires (32 ; 34) peuvent comprendre des surfaces généralement coniques. Ces surfaces peuvent être concentriques axialement.

Elles peuvent chacune présenter un profil de révolution autour de l'axe central 58 de l'actionneur électromagnétique 4, axe 58 selon lequel le plongeur 22 translate. Au moins un ou ces deux profils de révolution peuvent être droits, ou courbes. Par exemple, les enveloppes des biseaux annulaires (32 ; 34) peuvent former des quadriques de révolution. Les profils de révolutions peuvent être inclinés par rapport à l'axe central 58 d'un angle β, l'angle β étant compris entre 5° et 45°, éventuellement compris entre 10° et 25°.

La figure 4 représente un actionneur électromagnétique 104 selon un deuxième mode de réalisation de l'invention. Cette figure 4 reprend la numérotation des figures précédentes pour les éléments identiques ou similaires, la numération étant toutefois incrémentée de 100. Des numéros spécifiques sont utilisés pour les éléments spécifiques à ce mode de réalisation.

L'actionneur électromagnétique 104 peut être sensiblement identique à celui de la figure 3, il s'en distingue toutefois en ce qu'il ne présente qu'un seul biseau annulaire 134, qui délimite radialement l'entrefer radial extérieur 128 par exemple. L'entrefer radial intérieur 126 peut être délimité par une portion cylindrique 160 prolongeant la carcasse 120 vers le plongeur 122. Dès lors, le circuit dispose de davantage de matière ferromagnétique véhiculant les lignes de flux magnétique 154.

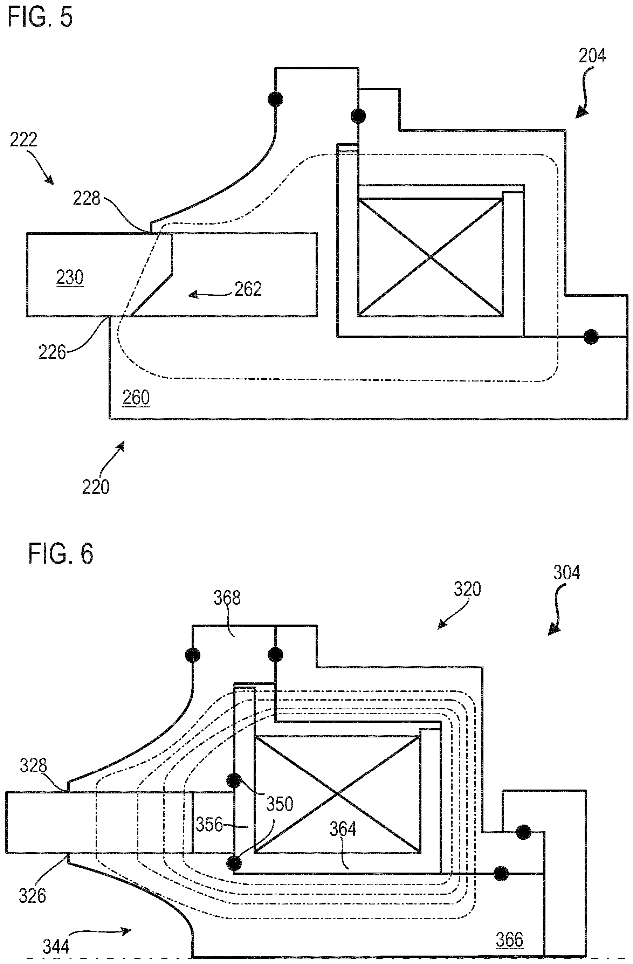

La figure 5 représente un actionneur électromagnétique 204 selon un troisième mode de réalisation de l'invention. Cette figure 4 reprend la numérotation des figures précédentes pour les éléments identiques ou similaires, la numération étant toutefois incrémentée de 200. Des numéros spécifiques sont utilisés pour les éléments spécifiques à ce mode de réalisation.

L'actionneur électromagnétique 204 selon le deuxième mode de réalisation peut être sensiblement identique à celui de la figure 4, il s'en distingue toutefois par le décalage axial des entrefers radiaux (226 ; 228). La portion cylindrique 260 peut dépasser l'entrefer externe 228, et prolonger davantage la carcasse 220. Le plongeur 222 peut montrer un chanfrein 262 optionnel, par exemple formé sur la portion tubulaire 230 du plongeur 222. Ce chanfrein 262 est tourné radialement vers l'intérieur ; soit vers la portion cylindrique 260. A nouveau, davantage de quantité de matière ferromagnétique devient disponible.

La figure 6 représente un actionneur électromagnétique 304 selon un quatrième mode de réalisation de l'invention. Cette figure 6 reprend la numérotation des figures précédentes pour les éléments identiques ou similaires, la numération étant toutefois incrémentée de 300. Des numéros spécifiques sont utilisés pour les éléments spécifiques à ce mode de réalisation.

L'actionneur électromagnétique 304 selon le quatrième mode de réalisation peut être sensiblement identique à celui de la figure 3. Il s'en détache par sa carcasse 320 qui est alors scindée circulairement entre les entrefers radiaux (326 ; 328), et par la cloison 356 qui est formée par le support de bobine 364.

Des joints 350 complémentaires sont ajoutés. Le noyau 344 est divisé circulairement en un barreau interne 366 entouré par une couronne externe 368 qui délimitent radialement l'entrefer radial interne 326 et l'entrefer radial externe 328 respectivement. Cette séparation permet d'employer des matériaux différents dans le circuit magnétique. Le barreau 366 et la couronne 368 peuvent être liés via le support 364 qui peut être réalisé en un matériau ferromagnétique, tout comme amagnétique de sorte que le flux magnétique traverse davantage les entrefers radiaux (326 ; 328) dans l'optique d'augmenter la force ferromagnétique.

## Revendications

1. Actionneur électromagnétique (4; 104; 204; 304), notamment un actionneur électromagnétique proportionnel, l'actionneur comprenant :
- une carcasse magnétique (20 ; 120 ; 220 ; 320);
- un plongeur électromagnétique (22 ; 122 ; 222 ; 322) mobile selon une direction axiale par rapport à la carcasse (20 ; 120 ; 220 ; 320), le plongeur (22 ; 122 ; 222 ; 322) comprenant une première moitié axiale formant une extrémité axiale du plongeur; et
- un premier entrefer circulaire (26; 126; 226; 326) qui est formé radialement entre le plongeur (22 ; 122 ; 222 ; 322) et la carcasse (20 ; 120 ; 220 ; 320) magnétique, et qui est disposé axialement au niveau de la première moitié axiale du plongeur ;
un deuxième entrefer circulaire (28 ; 128 ; 228 ; 328) qui est formé radialement entre le plongeur et la carcasse magnétique, et qui est disposé axialement au niveau de la première moitié axiale du plongeur ;
**caractérisé en ce que** le premier entrefer circulaire (26 ; 126 ; 226 ; 326) comprend une épaisseur radiale constante le long du plongeur électromagnétique (22 ; 122 ; 222 ; 322).

2. Actionneur (4 ; 104 ; 204 ; 304) selon la revendication 1, **caractérisé en ce que** le premier entrefer (26 ; 126 ; 226 ; 326) et le deuxième entrefer (28 ; 128 ; 228 ; 328) sont formés depuis la même extrémité axiale du plongeur, et/ou depuis la même extrémité axiale de la carcasse.

3. Actionneur (4 ; 104 ; 204 ; 304) selon l'une des revendications 1 à 2, **caractérisé en ce que** le plongeur (22 ; 122 ; 222 ; 322) est au moins mobile entre une première position et une deuxième position, l'épaisseur radiale du premier entrefer et/ou du deuxième entrefer est/sont constantes entre la première et la deuxième position.

4. Actionneur (4 ; 104 ; 204 ; 304) selon l'une des revendications 1 à 3, **caractérisé en ce que** la carcasse (20 ; 120 ; 220 ; 320) comprend une portion ferromagnétique venue de matière reliant radialement le premier entrefer (26 ; 126 ; 226 ; 326) et le deuxième entrefer (28 ; 128 ; 228 ; 328).

5. Actionneur (4) selon l'une des revendications 1 à 4, **caractérisé en ce que** la carcasse et le plongeur renferment entre eux une enceinte annulaire (52), éventuellement munie d'un évent (38) traversant la carcasse (20).

6. Actionneur (4) selon l'une des revendications 1 à 5, **caractérisé en ce que** le plongeur (22) comprend une portion tubulaire (30) d'épaisseur constante et disposée radialement entre le premier entrefer (26) et le deuxième entrefer (28), éventuellement depuis la première position à la deuxième position.

7. Actionneur (4 ; 104 ; 204 ; 304) selon la revendication 6, **caractérisé en ce que** la portion tubulaire (30) du plongeur (22) présente une épaisseur radiale constante.

8. Actionneur (4) selon l'une des revendications 1 à 7, **caractérisé en ce que** la carcasse comprend un premier biseau annulaire (32) délimitant radialement le premier entrefer (26), et/ou un deuxième biseau annulaire (34) délimitant radialement le deuxième entrefer (28).

9. Actionneur (4) selon la revendication 8, **caractérisé en ce que** le deuxième biseau (34) est disposé radialement dans le plongeur (22) et/ou dans le premier biseau (32).

10. Actionneur (4 ; 104) selon l'une des revendications 8 à 9, **caractérisé en ce qu'**au moins un ou chaque biseau annulaire (32 ; 34 ; 134) comprend un profil annulaire incurvé ou sensiblement droit.

11. Actionneur (4 ; 104) selon l'une des revendications 8 à 10, **caractérisé en ce qu'**au moins un ou chaque biseau annulaire (32 ; 34 ; 134) comprend un profil annulaire qui est généralement incliné par rapport à l'axe (58) de déplacement du plongeur (22 ; 122) d'un angle β, ledit angle β étant inférieur ou égal à 45° ou à 30° ou à 20°.

12. Actionneur (4) selon l'une des revendications 1 à 11, **caractérisé en ce que** la carcasse (20) comprend une cloison annulaire ferromagnétique (56) reliant radialement le premier entrefer (26) au deuxième entrefer (28).

13. Actionneur (4 ; 304) selon l'une des revendications 1 à 12, **caractérisé en ce que** la carcasse (20 ; 320) comprend un noyau (44 ; 344) et un couvercle (46) renfermant entre eux une chambre annulaire (52) étanche, notamment pour la source de champ magnétique (18).

14. Actionneur (4; 304) selon la revendication 13, **caractérisé en ce que** le couvercle (46) et/ou le noyau (44 ; 344) sont chacun venu de matière.

15. Vanne électromagnétique (2) pour fluide, notamment une vanne pour véhicule spatial ou pour turboréacteur, la vanne comprenant un actionneur (4 ; 104 ; 204 ; 304), **caractérisée en ce que** l'actionneur électromagnétique est conforme à l'une des revendications 1 à 14, préférentiellement la vanne (2) est une vanne à trois voies.
